# FASCICULE DE BREVET EUROPEEN

(11) **EP 3 548 851 B1**
(45) Date de publication et mention de la délivrance du brevet: **20.04.2022**
(21) Numéro de dépôt: 17818442.0
(22) Date de dépôt: 30.11.2017
(51) Int. Cl.: G01F 22/00, G01F 23/22, F01N 3/20, F01N 11/00

(54) **MÉTHODE D'ESTIMATION D'UN VOLUME DÉCONGELÉ PRÉSENT SOUS FORME LIQUIDE DANS UN RÉSERVOIR**
VERFAHREN ZUR SCHÄTZUNG EINES AUFGETAUTEN, IN FLÜSSIGER FORM IN EINEM TANK VORHANDENEN VOLUMENS
METHOD FOR ESTIMATING A THAWED VOLUME PRESENT IN LIQUID FORM IN A TANK

(30) Priorité: 30.11.2016 FR 1661685
(43) Date de publication de la demande: 09.10.2019
(73) Titulaire: Plastic Omnium Advanced Innovation and Research, 1130 Bruxelles (BE)
(72) Inventeur: ROLLAND, Jean-Philippe, 60200 Compiègne (FR); DECAMP, Sébastien, 60200 Compiègne (FR); BALDE, Mamadou Saliou, 1130 Bruxelles (BE)
(74) Mandataire: LLR
(86) Numéro de dépôt international: PCT/EP2017/081030
(87) Numéro de publication internationale: WO 2018/100087

(56) Documents cités:
- EP-A1- 1 712 754
- EP-A1- 2 940 284
- WO-A1-2014/042583
- WO-A1-2014/135951
- WO-A1-2017/077212
- FR-A1- 2 928 689
- FR-A1- 2 983 237
- FR-A3- 2 935 112
- JP-A- 2010 185 334
- US-A1- 2010 095 653
- US-A1- 2011 210 836

## Description

La présente invention concerne les dispositifs de chauffage montés dans les réservoirs contenant de l'urée, et souvent utilisés dans les systèmes de dépollution des gaz d'échappement des véhicules automobiles « SCR », ou dans des réservoirs contenant de l'eau, et utilisés pour alimenter les systèmes d'injection d'eau des moteurs de véhicules automobiles.

Par «système SCR», on entend désigner un système de réduction catalytique des NOx contenus dans les gaz d'échappement d'un moteur à combustion interne, de préférence d'un véhicule, et utilisant de l'urée comme précurseur d'ammoniac liquide.

Par le terme «urée», on entend désigner toute solution, généralement aqueuse, contenant de l'urée. L'invention donne de bons résultats avec les solutions eutectiques eau/urée pour lesquelles il existe un standard qualité : Par exemple, selon la norme DIN 70070, dans le cas de la solution d'AdBlue^{®}, également connue sous l'appellation anglosaxonne DEF (Diesel Ehaust Fluid), la teneur en urée est comprise entre 31,8 % et 33,2 % (en poids) (soit 32.5 +/- 0.7 % en poids) d'où une quantité d'ammoniac disponible comprise entre 18,0 % e 18,8 %. La solution Adblue gèle à partir d'une température de -11°C. L'invention peut également s'appliquer aux mélanges urée/formate d'ammonium en solution aqueuse également, vendus sous la marque Denoxium^{™}, et dont l'une des compositions (Denoxium-30) contient une quantité équivalente en ammoniac à celle de la solution d'Adblue^{®}. Ces derniers présentent comme avantage, de ne geler qu'à partir de -30°C (par rapport à -11°C), mais présentent comme inconvénients, des problèmes de corrosion liés à la libération éventuelle d'acide formique.

Aussi, pour maintenir le système antipollution en état de fonctionnement pendant ces périodes de baisse de température, il est nécessaire de réchauffer le réservoir contenant l'urée, de manière à obtenir un volume d'urée sous forme liquide suffisant et pouvoir nourrir le dispositif de pompage et d'injection d'urée dans les gaz d'échappement.

A cet effet, le réservoir est équipé d'un ou plusieurs éléments de chauffage se présentant par exemple sous la forme de feuilles souples disposées sur les parois latérales du réservoir, ou épousant la forme du fond du réservoir où se concentre prioritairement l'urée sous forme liquide.

Le réservoir peut également comprendre des capteurs immergés, tels qu'un capteur de niveau de type mécanique à flotteur ou un capteur de niveau par ultrason pour mesurer le volume de liquide, ou encore un capteur de qualité par ultrason ou par effet capacitif

Toutefois, ces dispositifs ne permettent pas de déterminer une quantité de liquide disponible lorsqu'ils sont emprisonnés dans la glace, ce qui peut advenir lorsque le véhicule connait une période d'arrêt prolongée, au cours de laquelle le dispositif de chauffage n'est pas actif, et que le volume d'urée contenue dans le réservoir gèle partiellement ou en totalité.

Il devient alors difficile voire impossible de connaitre la quantité d'urée présente sous forme liquide dans le réservoir. Cette information est notamment importante pour décider quand autoriser l'activation du dispositif d'injection.

Une première méthode permettant de résoudre ce problème est décrite dans la publication FR 2 928 689. Selon cette publication, on mesure à des intervalles réguliers la température à l'intérieur du réservoir et, lorsque cette température est supérieure à un certain seuil, on démarre la pompe de dosage, et lorsque la pression de sortie est satisfaisante, on démarre l'injecteur d'urée.

La publication DE 10 2004 061259 propose une stratégie similaire avec une sonde de température disposée dans le conduit en sortie de la pompe de dosage de manière à assurer que ce circuit n'est pas obstrué par de l'urée congelée. D'autres publications comme WO 2014/042583 A1 et WO 2014/135951 A1 proposent des variantes toujours basées sur une sonde de température disposée à l'intérieur du réservoir.

Ces méthodes présentent toutefois une difficulté de mise en œuvre, en ce que la mesure de la température est soumise à de grandes variations et donne des indications très imprécises. Une observation plus poussée du mode de décongélation de l'urée permet de mettre en évidence la formation de poches d'air, ou de zones dans lesquelles l'urée liquide est mélangé avec des glaçons solides qui rendent la mesure de la température à l'intérieur du réservoir fortement dépendante de la zone dans laquelle est disposé le thermomètre et des conditions de décongélation dans cette zone. Il en résulte de fortes incertitudes dans la mise en œuvre de la méthode.

L'invention a pour objet de proposer, lorsque la température extérieure est particulièrement basse et que l'urée contenu dans le réservoir est partiellement ou totalement gelé, une méthode d'évaluation d'un volume d'urée décongelé présent sous forme liquide dans le réservoir pendant la période suivant le démarrage du véhicule.

Cette méthode repose sur la mesure de la température extérieure, et s'applique à des réservoirs pouvant contenir de l'urée mais également à tout réservoir contenant un liquide susceptible de geler dans des conditions hivernales, ledit réservoir comprenant des éléments de chauffage.

La méthode selon l'invention a pour objet d'estimer un volume de liquide décongelé contenu dans un réservoir de véhicule automobile, ledit réservoir comprenant au moins un élément de chauffage. Ce volume estimé de liquide est à tout instant de la mise en œuvre de la méthode inférieur ou égal au volume de liquide réellement contenu dans le réservoir.

Après avoir démarré le véhicule et lorsque le au moins un moyen de chauffage est activé, on exécute à intervalles de temps réguliers les opérations suivantes :
- Étape A, à l'aide d'un thermomètre disposé à l'extérieur du réservoir, on obtient une température de l'air ambiant à l'extérieur du réservoir,
- Étape B, à l'aide d'une première relation préétabli en fonction de ladite température à l'extérieur du réservoir, on détermine un transfert d'énergie thermique entre le contenu du réservoir et le milieu extérieur
- Étape C, à l'aide d'une seconde relation préétablie en fonction de la puissance produite par le au moins un élément de chauffage, et à, on détermine un transfert d'énergie thermique entre le au moins élément de chauffage et le contenu du réservoir,
- Étape D, en fonction des transferts d'énergie déterminés aux étapes, et à l'aide d'une troisième relation préétablie, on détermine une quantité de liquide décongelé ou recongelé, pendant cet intervalle de temps,
- Étape E, on additionne les quantités de liquide décongelés et recongelés pendant les intervalles de temps successifs précédents pour déterminer un volume estimé de liquide décongelé présent dans le réservoir.

L'invention propose d'établir un bilan d'énergies thermiques échangées entre le contenu du réservoir, qui comprend l'addition du volume de liquide et du volume de glace, et l'atmosphère extérieure d'une part, et entre le contenu du réservoir et les éléments de chauffage d'autre part.

Lorsque ce bilan est positif, cela conduit à produire une quantité de liquide décongelé supplémentaire. Lorsque, dans certaines circonstances particulières, ce bilan est négatif on considère qu'une quantité de liquide s'est à nouveau transformée en glace et vient en déduction de la quantité totale de liquide présent dans le réservoir.

Compte tenu des incertitudes observées dans la mesure des niveaux et des températures pendant la phase de décongélation, l'estimation du volume de liquide présent dans le réservoir à l'aide de la méthode faisant l'objet de la présente invention a pour objet de déterminer un volume liquide minimal, en tout état de cause inférieur au volume de liquide réel. Cette estimation est donc fondée sur des résultats expérimentaux dans lesquels les approximations sont systématiquement ramenées à la situation la plus défavorable.

La première relation préétablie fait correspondre l'énergie thermique dissipée vers l'extérieur à la seule valeur de la température extérieure et, de manière optionnelle, à la vitesse du véhicule, permettant de la sorte de s'affranchir des incertitudes liées à la mesure de la température à l'intérieur du réservoir.

De même, la deuxième relation préétablie fait correspondre l'énergie thermique reçue, de la puissance électrique de l'élément de chauffage pendant l'intervalle de temps considéré.

Et la troisième relation préétablie fait correspondre une variation de volume de liquide avec un bilan d'énergie apporté au réservoir pendant un intervalle de temps donné.

Ce calcul d'échange thermique se fait donc à l'aide de relations fondées sur des mesures expérimentales. Ces relations préétablies peuvent prendre la forme de tables de valeurs, de courbes ou de relations mathématiques.

Ces trois relations sont ajustées de sorte que le volume estimé est toujours inférieur au volume réellement présent dans le réservoir et observé au cours des différents plans d'expérience.

La méthode selon l'invention peut aussi comprendre isolément ou en combinaison les caractéristiques suivantes :
- Après avoir démarré le véhicule et avant la première exécution de l'étape A, on obtient une température à l'intérieur du réservoir à l'aide d'un thermomètre placé à l'intérieur dudit réservoir et, en comparant cette température initiale à l'intérieur du réservoir à des seuils de température préétablis, on détermine, en fonction d'un temps d'arrêt du véhicule et d'un volume présent dans le réservoir au début dudit temps d'arrêt du véhicule, un volume initial sous forme liquide présent dans le réservoir, et un temps mort à l'issue duquel on exécute ladite étape A pour un premier intervalle de temps.
- on détermine la valeur du volume initial sous forme liquide présent dans le réservoir, et du temps mort de sorte que :
   ∘ lorsque la température initiale à l'intérieur du réservoir est supérieure à un premier seuil donné supérieur ou égal à un second seuil donné, le volume initial est égal à un volume actualisé et le temps mort est égal à zéro, ou
   ∘ lorsque la température initiale à l'intérieur du réservoir est inférieure audit premier seuil donné on active ledit moyen de chauffage et
      ▪ lorsque la température initiale à l'intérieur du réservoir est inférieure à un troisième seuil de température donné, le volume initial est égal à zéro et le temps mort est égal à une valeur prédéterminée, ou
      ▪ lorsque la température initiale à l'intérieur du réservoir est comprise entre le troisième seuil de température et un deuxième seuil de température donné supérieur au troisième seuil et,
         • lorsqu'un volume estimé de liquide présent dans le réservoir au moment du précédent arrêt du véhicule est inférieur à un seuil donné, le volume initial est égal à zéro et le temps mort est égal à ladite valeur prédéterminée, ou
         • lorsque ledit volume estimé de liquide présent dans le réservoir au moment du précédent arrêt du véhicule est supérieur audit seuil donné et
            ∘ lorsqu'un temps de stationnement du véhicule est supérieur à un seuil donné la valeur du volume initial est égale à zéro, et le temps mort est égal à zéro ou,
            ∘ lorsque ledit temps de stationnement du véhicule test inférieur audit seuil donné, le volume initial est égal au volume estimé de liquide présent dans le réservoir au moment du précédent arrêt du véhicule diminué d'un volume de liquide recongelé pendant la durée de stationnement du volume, et le temps mort est égal à zéro,
- A l'étape E, le volume estimé de liquide décongelé présent dans le réservoir est augmenté de la valeur du volume initial.
- A l'issue de l'étape E, et au cours d'une étape F, on obtient un signal d'un capteur de niveau, et on évalue la validité de ce signal et,
   o lorsque ce signal est considéré comme valable, on évalue à l'aide dudit capteur de niveau une valeur de volume actualisée de liquide présent dans le réservoir, et on remplace la valeur du volume estimé de liquide décongelé obtenue à l'issue de cet intervalle de temps par ladite valeur de volume actualisée ou,
   o lorsque ce signal n'est pas considéré comme valable, on conserve la valeur du volume estimé de liquide décongelé obtenue à l'issue de cet intervalle de temps,
   et on recommence l'exécution de l'étape A pour un intervalle de temps suivant.
- Au cours de l'étape B, on obtient une valeur de la vitesse du véhicule et dans laquelle ladite première relation dépend de la température extérieure et de ladite vitesse du véhicule.
- La première relation permettant de déterminer un transfert d'énergie thermique entre le contenu du réservoir et le milieu extérieur, la seconde relation permettant de déterminer un transfert d'énergie thermique entre le au moins un élément de chauffage et le contenu du réservoir, et la troisième relation permettant de déterminer la quantité de liquide décongelé ou recongelé, sont établies de façon expérimentale.
- La méthode selon l'invention est appliquée à un réservoir contenant de l'eau, ou de l'urée dissout dans de l'eau, ou un mélange ternaire composé, d'eau, d'urée et d'un alcool.
- L'alcool formant le mélange ternaire est choisi parmi les alcools tel que le méthanol, l'éthanol, l'éthylène-glycol ou l'isopropanol.

L'invention concerne également un dispositif de stockage de liquide comprenant :
- un réservoir de stockage comprenant au moins un élément de chauffage,
- des thermomètres disposés à l'intérieur et dans le véhicule à l'extérieur du réservoir,
- un ou plusieurs capteurs immergés;
- un moyen de mesure de la vitesse du véhicule,
- une pompe d'injection associée à un moyen de mesure d'un volume injecté,
- une unité de traitement informatique reliée par des moyens d'échange de données avec les moyens de mesure de la température, le capteur immergé, le moyen de mesure de la vitesse du véhicule, le moyen de mesure d'un volume injecté, et comprenant un moyen de stockage des données,
- des instructions codées chargées dans l'unité de traitement informatique permettant d'exécuter les étapes de la méthode selon l'une des caractéristiques ci-dessus.

L'invention sera mieux comprise à la lecture des figures annexées, qui sont fournies à titre d'exemples destinés à supporter la présente description et ne présentent aucun caractère limitatif, dans lesquelles :
- La figure 1 est une vue schématique d'un réservoir.
- La figure 2 est un diagramme logique représentant les différentes étapes de mise en œuvre de l'invention.

A titre de support exemplatif servant de base à la description qui suit on s'intéressera plus particulièrement à une méthode de calcul du volume présent sous forme liquide dans un réservoir contenant de l'urée dissoute dans de l'eau ou dans un alcool. Il convient de souligner toutefois que les éléments de la méthode s'appliquent mutatis mutandis à tout autre réservoir contenant un liquide susceptible de passer de la phase solide à la phase liquide dans les conditions de température observées au cours de l'utilisation courante du véhicule dans lequel le réservoir est implanté.

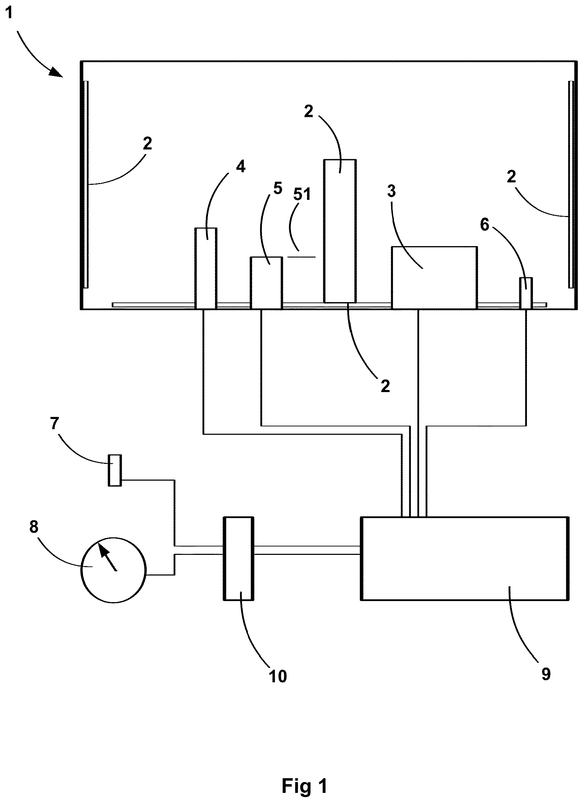

La figure 1 représente un dispositif de stockage d'urée comprenant un réservoir 1, à l'intérieur duquel est disposée une pluralité d'éléments chauffants 2 fixés, à titre d'exemple, sur les parois latérales ou sur le fond du réservoir ou encore au milieu du volume intérieur du réservoir.

Le réservoir peut également contenir des capteurs immergés tels qu'un capteur de niveau 4, ou un capteur de qualité 5. Ces capteurs présentent la particularité d'émettre un signal valable lorsqu'ils sont immergés dans une poche de liquide contenue dans le réservoir, et d'émettre un signal incohérent ou de ne pas émettre de signal du tout lorsqu'ils emprisonnés dans du liquide congelé.

Le capteur de niveau peut être à effet capacitif comprenant des cellules de mesure dont la capacité électrique change en fonction de l'état liquide ou solide de l'urée. Le capteur peut aussi être du type à ultrason comprenant un transducteur disposé de sorte que les ultrasons produits par le transducteur se réfléchissent sur l'interface séparant le liquide de la partie gazeuse (ou solide) surmontant le liquide. Les ondes réfléchies sont analysées par un moyen de réception. Lorsque le capteur est emprisonné dans de l'urée sous forme solide, l'écho engendré par la réflexion du signal ne parvient pas au moyen de réception dans un intervalle de temps prédéterminé, et le signal reçu est alors considéré comme non valable.

Le capteur de niveau peut également être du type mécanique et comporter un flotteur dont l'élévation indique le volume contenu dans le réservoir. Lorsque le flotteur est bloqué dans la glace il émet un signal constant considéré comme non valable.

Le capteur de qualité 5 fonctionne de manière similaire au capteur de niveau par ultrason. Les ultrasons émis par le transducteur piezzo-électrique se réfléchissent sur un réflecteur 51, et effectuent un nombre donné d'aller-retour entre le réflecteur et le transducteur en traversant le liquide à chaque passage. Lorsque le capteur est emprisonné dans de l'urée sous forme solide, le temps de parcours de l'onde sonore ne parvient pas au récepteur dans un intervalle de temps prédéterminé et le signal délivré est considéré comme non valable.

A l'inverse, lorsqu'un de ces capteurs donne une mesure considérée comme valable il est possible d'en déduire que le réservoir contient un volume minimal de liquide V_{act}. Ce volume actualisé V_{act} peut résulter d'une estimation fondée sur des valeurs de volume stockées en mémoire et acquises expérimentalement lorsque le capteur se réveille, ou être indicative du volume réel de liquide présent dans le réservoir lorsque tout le contenu du réservoir est en phase liquide.

Lorsque le réservoir contient au moins un de ces capteurs de niveau ou de qualité, dénommés capteurs immergés au sens large, il sera possible de faire usage du signal délivré comme cela sera expliqué en détail dans la suite de cette description.

Le réservoir comprend également une pompe d'injection 3 associée à un moyen de produire un signal significatif de la quantité de liquide injecté dans un intervalle de temps donné, et un thermomètre 6 permettant d'évaluer la température θᵢₙₜ₀ du liquide à l'intérieur du réservoir. On observera ici à nouveau, que cette mesure de température est fiable lorsque la totalité du contenu du réservoir est sous forme liquide.

Les capteurs immergés 4 et 5, le thermomètre intérieur 6, la pompe d'injection 3 sont reliés à une unité de traitement informatique 9.

Le dispositif comprend également un thermomètre extérieur au réservoir 7 disposé dans le véhicule à l'extérieur de l'habitacle et du compartiment moteur proprement dit, pour mesurer la température θₑₓₜᵢ de l'air ambiant extérieur au véhicule et au réservoir, et un moyen de mesure de la vitesse du véhicule 8. En règle générale, ces instruments sont reliés au calculateur central du véhicule 10. L'unité de traitement informatique 9 comporte alors une liaison avec le calculateur central 10 pour acquérir les valeurs de la température externe et de la vitesse du véhicule.

L'unité de traitement informatique contient une mémoire dans laquelle sont stockées des instructions codées qui, lorsqu'elles sont exécutées par l'unité de traitement permettent d'exécuter les étapes du procédé selon l'invention.

Ce logiciel comprenant lesdites instructions codées peut également être stocké sur un support lisible puis chargé dans ladite unité de traitement.

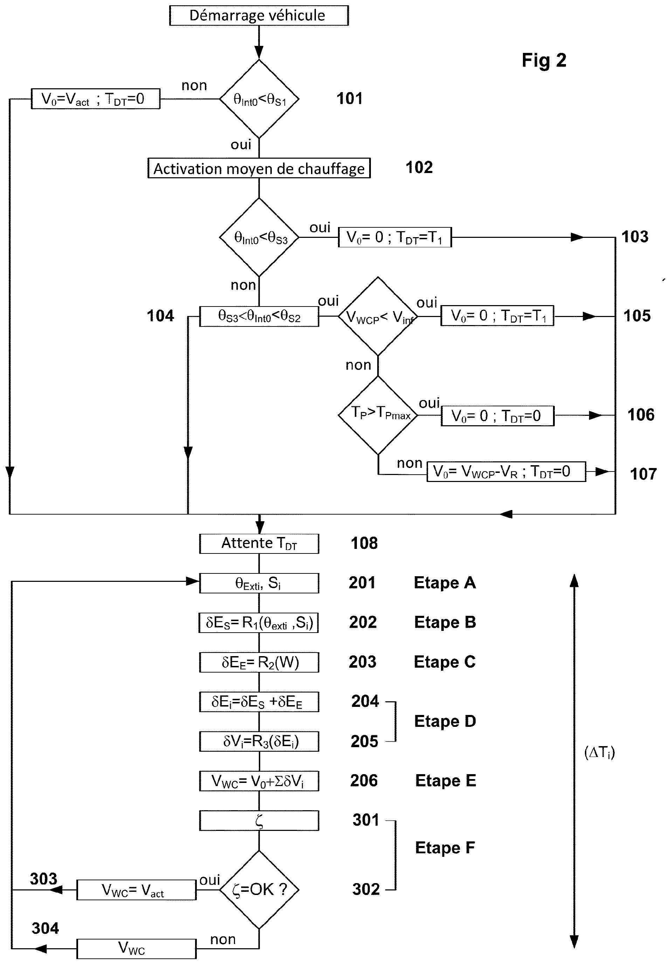

La figure 2 est un logigramme permettant de détailler les différentes étapes de mise en œuvre du procédé.

La mise en œuvre du procédé comprend deux phases distinctes. Une première phase de réinitialisation, dans laquelle on détermine les données initiales au démarrage du véhicule ou après un arrêt de courte durée et formée des étapes 101 à 107. A cette phase d'initialisation succède une phase de scrutation ou d'évaluation proprement dite de la quantité de liquide présent dans le réservoir et formée des étapes A à E (201 à 206). Cette phase d'évaluation est exécutée en boucle à intervalles de temps ΔTᵢ réguliers.

Au démarrage du véhicule, lorsque la clé de contact est introduite et que les organes du véhicule sont activés, on obtient, à l'aide du thermomètre 6, une valeur de température θᵢₙₜ₀ régnant à l'intérieur du réservoir. La mesure de cette température, intérieure initiale θᵢₙₜ₀, même si on peut considérer que sa valeur est largement entachée d'erreur lorsque le réservoir est gelé ou partiellement gelé, s'effectue en règle générale en un point proche du point d'aspiration de la pompe d'injection, et reste significative de la température régnant autour de ce point et de la possible présence de liquide à ce niveau.

Lorsque (101) la température à l'intérieur du réservoir θᵢₙₜ₀ est supérieure à un premier seuil de température donné θ_{S1}, on considèrera que le réservoir contient uniquement du liquide et que le volume présent dans le réservoir est alors mesuré directement par le capteur immergé de niveau 4. On observera ici que la mesure de cette température est alors relativement fiable.

A titre d'exemple, pour un réservoir contenant de l'urée, ce premier seuil de température θ_{S1} peut utilement être fixé à 5°C. Dans le cas contraire, on considère que le volume V₀ compris dans le réservoir est entièrement sous forme liquide et est égal à la valeur V_{act} donnée par le capteur de niveau 4. On passe alors directement à la phase de scrutation.

Lorsque la température à l'intérieur du réservoir θᵢₙₜ₀ est inférieure à ce premier seuil de température θ_{S1}, on active (102) les éléments de chauffage 2.

La méthode prévoit alors une série d'étapes d'initialisation ayant pour objet de déterminer un volume de liquide initial V₀ présent dans le réservoir, ainsi qu'un temps mort T_{DT} servant à retarder le lancement de la phase de scrutation.

La valeur du temps mort T_{DT} pendant lequel on suspend le démarrage de la phase de scrutation au cours de laquelle on calcule un volume estimé de liquide est égale à une valeur nulle ou non nulle préétablie expérimentalement. Lorsque cette valeur est non nulle, elle correspond au temps T₁ de chauffe nécessaire à l'apparition d'une première quantité de liquide. A titre d'exemple en considérant une température de -40°C la valeur T₁ du temps mort est de l'ordre de 5 à 6 minutes, selon la puissance des éléments de chauffage installés dans le réservoir.

Lorsque (103) la température θᵢₙₜ₀ initiale à l'intérieur du réservoir est inférieure à un troisième seuil de température θ_{S3}, correspondant par exemple à la température de décongélation, on considèrera qu'une partie importante de liquide est sous forme solide et que le volume initial V₀ est égal à zéro et que le temps mort est égal à T₁. Dans le cas de l'urée, ce troisième seuil θ_{S3} correspond à une température de -9°C.

Lorsque (104) la température intérieure initiale θᵢₙₜ₀ est comprise entre un second seuil θ_{S2} et le troisième seuil θ_{S3} de température, on va considérer que le volume initial de liquide présent dans le réservoir est en relation avec le volume V_{WCP} estimé ou réel lors du précédent arrêt du véhicule. La valeur du second seuil θ_{S2} de température est généralement égale à la valeur du premier seuil θ_{S1} Dans le cas de l'urée, ce second seuil θ_{S2} peut utilement être fixé à 5°C.

Si ce volume V_{WCP} est inférieur à un seuil donné V_{inf}, on adoptera une évaluation prudentielle du volume V₀ qui est alors considéré comme nul. Le temps mort T_{DT} est alors égal à T₁ (105).

Lorsque le volume V_{WCP} est supérieur à V_{inf} on obtient une valeur du temps de stationnement T_{P}, écoulé entre le précédent arrêt et le redémarrage du véhicule.

Si (106) ce temps de stationnement Tp est supérieur à un seuil donné T_{Pmax} la valeur du volume initial V₀ est alors considérée comme nulle, et le temps mort T_{DT} est égal à zéro. En effet, bien que la température θᵢₙₜ₀ à l'intérieur du réservoir soit supérieure à la température de congélation θ_{S3}, les variations de température pendant le temps de stationnement ne sont pas maitrisées et ne permettent pas de déterminer une valeur du volume initial. A titre d'exemple le seuil de temps de stationnement T_{Pmax} peut utilement être de l'ordre de deux heures.

Si (107) le temps de stationnement T_{P} est inférieur au seuil préétabli T_{Pmax} on considèrera que, pendant toute la durée de l'arrêt, les éléments de chauffage sont désactivés et que le contenu du réservoir ne reçoit aucune énergie entrante (E_{E} = Σ δE_{E} = 0).

Pour calculer la valeur de l'énergie sortante transférée entre le contenu du réservoir et le milieu extérieur pendant le temps d'arrêt, on adopte une valeur de température extérieure correspondant aux conditions les plus dures. Dans le cas d'espèce concernant l'urée cette température est égale, à titre d'exemple, à -40°C. A l'aide d'une première relation R₁(θₑₓₜᵢ) faisant correspondre pour un intervalle de temps donné une température extérieure θₑₓₜᵢ et le transfert d'énergie thermique δE_{S} entre le contenu du réservoir et le milieu extérieur, on détermine pour la durée de stationnement une quantité totale d'énergie perdue par le contenu du réservoir négative Es = ΣδE_{S} avec δE_{S} = R₁(-40°C). Le bilan d'énergie E= E_{E}+E_{S} est un bilan négatif.

On utilise alors une troisième relation R3(E), faisant correspondre pour un intervalle de temps donné un bilan de l'énergie échangée avec le contenu du réservoir et une quantité de liquide congelée ou décongelée. Le bilan de l'énergie étant négatif, la valeur obtenue correspond à une quantité de liquide recongelée V_{R} pendant la période de stationnement. Cette valeur V_{R} vient alors en déduction de la valeur de liquide V_{WCP} présente dans le réservoir au moment du précédent arrêt pour former la valeur du volume initial V₀ =V_{WCP}-V_{R}.

La stratégie de détermination du volume V₀ et du temps mort T_{DT} détaillée ci-dessus est issue d'une démarche expérimentale, et peut connaitre de nombreux arrangements dans lesquels le nombre de seuils de température significatifs, ici égal à trois seuils, est augmenté ou diminué. De même, le nombre et la valeur des seuils retenus pour les temps de stationnement peuvent être adaptés à volonté.

Après avoir déterminé le volume initial V₀ présent sous forme liquide dans le réservoir et un temps mort T_{DT}, et après avoir attendu pendant une durée égale audit temps mort (108), on passe à la phase de scrutation au cours de laquelle on procède à l'estimation dynamique du volume de liquide estimé Vwc décongelé présent dans le réservoir.

Sous l'action des éléments de chauffage, l'urée passe progressivement de la forme solide à la forme liquide. Et, dans certaines circonstances, il est aussi possible de voir réapparaitre de l'urée sous forme solide.

La phase d'évaluation peut alors commencer à s'exécuter en boucle.

En commençant par le premier intervalle de temps ΔT₁, puis à intervalles de temps successifs réguliers et constants ΔTᵢ, on procède au cours d'une étape A (201) à l'acquisition, à l'aide du thermomètre 7 disposé à l'extérieur du réservoir, de la valeur de la température θₑₓₜᵢ de l'air ambiant régnant à l'extérieur du réservoir et significative de la température à l'extérieur du véhicule.

Au cours d'une **étape B** (202), on détermine à l'aide de la première relation R₁(θₑₓₜᵢ) une valeur de l'énergie sortante δE_{S} échangée pendant cet intervalle de temps entre le contenu du réservoir et le milieu extérieur. De manière optionnelle, il est avantageux de prendre en compte également la vitesse Si du véhicule pour améliorer la précision de l'évaluation de cette échange. On obtient une valeur de la perte δE_{S} =R₁(θₑₓₜᵢ, Si). Lorsque cette vitesse n'est pas connue on considère par défaut que le véhicule roule à grande vitesse, par exemple à 140km/h, de sorte que la perte d'énergie est augmentée par défaut. Ce transfert d'énergie δE_{S} est une perte, et a donc une valeur négative.

La relation R₁(θₑₓₜᵢ) est une relation préétablie de façon expérimentale à la suite de campagnes de mesures, faisant correspondre la température extérieure θₑₓₜᵢ et la quantité d'énergie δE_{S} De manière optionnelle il peut être avantageux de prendre en compte la vitesse Si du véhicule pendant l'intervalle de temps ΔTᵢ, considéré. La relation R₁ devient alors une relation de type R₁(θₑₓₜᵢ, Si). Les résultats obtenus sont spécifiques à la forme du réservoir et à son emplacement dans le véhicule, et à la nature du liquide contenu dans le réservoir. Cette relation R₁(θₑₓₜᵢ) peut prendre la forme d'un tableau de résultats, de courbes ou encore de formules mathématiques stockées dans la mémoire de l'unité de traitement informatique 9.

La valeur d'énergie retenue est celle correspondant aux conditions hivernales les plus sévères, de sorte que la perte d'énergie correspondante est la perte maximale susceptible d'être observée.

On détermine ensuite à **l'étape C** (203), à l'aide d'une deuxième relation R2(W) la valeur de l'énergie transférée au contenu du réservoir par les éléments de chauffage 2. Cette valeur dépend de la puissance W délivrée par les éléments de chauffage. δE_{E} = R2(W) pendant l'intervalle de temps ΔTᵢ. Ce transfert d'énergie entrant a un signe positif. On observera ici que la puissance délivrée par les éléments de chauffage peut être variable en fonction de la puissance disponible au niveau de la batterie. De même, lorsque le véhicule est équipé de la fonction « Stop and Start » certains constructeurs procèdent à la désactivation des éléments de chauffage pour éviter une consommation électrique trop importante.

La relation R2(W) est également une relation préétablie de façon expérimentale à la suite de campagnes de mesures réalisées en fonction de la puissance du chauffage intégré dans le réservoir. Les résultats obtenus sont spécifiques à une forme du réservoir donnée, et à la nature du liquide contenu dans le réservoir. Cette relation R2 peut prendre la forme d'un tableau de résultats, de courbes ou encore de formules mathématiques stockées dans la mémoire de l'unité de traitement informatique 9.

A **l'étape D** (204), on calcule le bilan de l'énergie totale transférée au contenu du réservoir pendant l'intervalle de temps ΔTᵢ considéré ; δEᵢ, = δE_{E} + δE_{S}

Ce bilan est en règle générale positif, de sorte que la quantité d'énergie transférée au liquide accélère la décongélation. Toutefois, lorsque la puissance des éléments de chauffage est volontairement limitée pour sauvegarder la batterie, ou encore dans certaines conditions de froid non représentatives de conditions réalistes, il est possible d'observer des bilans négatifs aboutissant à la congélation d'une quantité de liquide.

Puis (205), à l'aide de la troisième relation R₃(δEᵢ) on calcule la quantité de liquide δVᵢ congelé ou décongelé pendant l'intervalle de temps ΔTᵢ en fonction du bilan d'énergie δEᵢ obtenu.

La relation R₃(δEᵢ) est également obtenue de manière expérimentale en croisant les résultats des deux plans d'expérience précédents.

Ces mesures expérimentales incluent des puissances de chauffe variables. On mesure la quantité de liquide obtenue pour déterminer l'énergie réellement transférée au contenu du réservoir, en considérant que l'énergie échangée avec le milieu extérieur correspond à la relation R₁(θₑₓₜᵢ) et que la relation R2(W) correspond à l'énergie apportée par les éléments de chauffage. De manière similaire aux relations R₁(θₑₓₜᵢ) et R2(W), la relation R₃(δEᵢ) peut se présenter sous forme de tableaux, de courbes ou de relations mathématiques stockées dans la mémoire de l'unité traitement informatique. La relation R₃(δEᵢ) retenue est celle correspondant aux conditions les plus sévères (conditions endogènes et environnementales), de sorte que l'efficacité réelle de dégel sera toujours supérieure à l'efficacité supposée.

Ce volume élémentaire est soit positif si la quantité d'énergie fournie est suffisante pour décongeler l'urée, soit négatif si, pendant la période de temps considérée, de la glace s'est reformée.

A l'**étape E** (206) on calcule le volume estimé total Vwc de liquide décongelé présent dans le réservoir Vwc = V₀ + ΣδV_{i.}

Comme cela a été indiqué ci-dessus, les relations expérimentales R₁(θₑₓₜᵢ), R2(W) et R₃(δEᵢ) ont été déterminées pour que la quantité de liquide estimée soit une quantité volontairement estimée par défaut, et inférieure à la quantité de liquide réellement présent dans le réservoir.

Aussi, il peut apparaitre avantageux de se servir des indications de volume données par les capteurs immergés.

Au cours d'une **étape F,** après avoir calculé la valeur Vwc, on obtient (301) un signal ζ d'un ou de plusieurs capteurs immergés. Selon les dispositions explicitées ci-dessus, on estime la validité de ce signal (302). On entend ici comme valable, le fait que ce signal est caractéristique du comportement du capteur immergé dans une poche de liquide. A contrario, un signal non valable signifie que le signal est caractéristique du comportement du capteur lorsque le capteur est pris dans la glace.

Lorsque ce signal ζ provenant du capteur de niveau 4 est considéré comme valable (303), on détermine alors une valeur V_{act} estimée ou réelle du volume de liquide présent dans le réservoir et on substitue cette valeur à la valeur Vwc précédemment calculée. Cette valeur V_{act} peut donc représenter la valeur réelle de liquide présent dans le réservoir et mesurée par le capteur de niveau 4 immergé, ou encore une valeur estimée à partir de valeurs, déterminées par tests et stockées en mémoire, mettant en corrélation le signal provenant du capteur et la quantité par défaut de liquide présente dans le réservoir.

Comme cela a déjà été évoqué, la relation R_{1,}(θₑₓₜᵢ), la relation R2(W) et la relation R₃(δEᵢ) sont des relations obtenues expérimentalement qui permettent de déterminer la valeur Vwc et qui sont établies pour donner une valeur de volume liquide estimée par défaut. Cette valeur Vwc est donc inférieure dans pratiquement tous les cas à la valeur V_{act} qui elle-même est inférieure ou égale à la valeur du volume de liquide réellement contenu dans le réservoir.

Lorsque le signal ζ n'est pas considéré comme valable (304), on conserve la valeur V_{WC} obtenue.

La méthode se poursuit en recommençant l'acquisition d'une température extérieure θₑₓₜᵢ pour un intervalle de temps suivant ΔT_{i+1.}

On notera que, lorsque le réservoir contient une quantité de liquide suffisante pour que le capteur de niveau fournisse une indication valable correspondante à la valeur du volume d'urée sous forme liquide réellement présent dans le réservoir et égale à la valeur actualisée V_{act,,} la valeur estimée Vwc, est remplacée à chaque intervalle de temps par la valeur actualisée V_{act}, et reste donc limitée à cette valeur. La méthode peut donc s'appliquer sans être interrompue.

On peut également considérer qu'il n'est plus nécessaire de poursuivre le calcul de la valeur estimée du volume de liquide Vwc, lorsque la température à l'intérieur du réservoir θᵢₙₜ est supérieure au premier seuil de température θ_{S1} Dans ce cas, il devient nécessaire d'acquérir une valeur de la température θᵢₙₜ à l'intérieur du réservoir lorsque, par exemple, la valeur estimée Vwc, est remplacée à plusieurs intervalles de temps successifs par la valeur actualisée V_{act},.

Comme cela été évoqué, la détermination des lois R1, R2, R3 dépend de la forme et de l'emplacement du réservoir mais également de la nature du liquide contenu dans ce dernier. Bien que la description qui précède fasse état d'un réservoir contenant de l'urée, il est tout à fait possible d'adapter la méthode pour un réservoir contenant de l'eau, de l'urée dissout dans de l'eau, ou ce qu'il est convenu d'appeler un mélange ternaire comprenant de l'urée, de l'eau et un alcool.

L'alcool formant le mélange ternaire peut utilement être choisi parmi les alcools tel que le méthanol, l'éthanol, l'éthylène-glycol ou l'isopropanol.

Dans le cas d'un réservoir contenant de l'urée utilisé pour traiter les gaz d'échappement, la connaissance du volume estimé Vwc de liquide présent dans le réservoir permet d'activer au plus tôt la pompe d'injection reliée au dispositif de traitement des gaz ou, dans le cas contraire, permet de limiter ce débit en cas d'insuffisance de liquide dans le réservoir. Lorsque la pompe est activée, on prend soin de déterminer la quantité de liquide injecté V_{Inj}, de manière à déduire ce volume du volume de liquide décongelé Vwc calculé selon la méthode ci-dessus. La nouvelle valeur du volume de liquide V_{WC}' est alors égale à V_{WC}-V_{Inj}. Aussi, la méthode selon l'invention permet de gérer au plus tôt et le plus efficacement possible, une stratégie de traitement des gaz d'échappement lorsque le véhicule connait des conditions de température très basses.

La méthode décrite ci-dessus permet donc de fournir un modèle dynamique et évolutif de la gestion d'un réservoir contenant un liquide susceptible de geler dans les conditions normales d'utilisation en s'affranchissant des incertitudes de mesure de la température à l'intérieur du réservoir.

### NOMENCLATURE

1 Réservoir
2 Elément de chauffage.
3 Pompe d'injection.
4 Capteur de niveau immergé.
5 Capteur de qualité immergé.
51 Réflecteur.
6 Thermomètre disposé à l'intérieur du réservoir.
7 Thermomètre disposé à l'extérieur du réservoir.
8 Moyen de mesure de la vitesse du véhicule.
9 Unité de traitement informatique.
10 Calculateur central du véhicule.
101 à 108 Initialisation : détermination du volume V₀ et du temps mort T_{DT}.
201 à 206 Détermination de la quantité de liquide estimée présent dans le réservoir.
301 à 303 Actualisation du volume estimé de liquide.
δE_{S} Transfert d'énergie thermique entre le contenu du réservoir et le milieu extérieur pendant l'intervalle de temps ΔT_{i.}
δE_{E} Transfert d'énergie thermique entre les éléments de chauffage et le contenu du réservoir pendant l'intervalle de temps ΔT_{i.}
δEᵢ Bilan énergétique échangé avec le contenu du réservoir pendant l'intervalle de temps ΔTᵢ.
R₁ Première relation préétablie faisant correspondre la température extérieure (θₑₓₜᵢ) et le transfert d'énergie thermique (δE_{S}) entre le contenu du réservoir et le milieu extérieur
R2 Deuxième relation préétablie faisant correspondre, la puissance (W) produite par les éléments de chauffage et un transfert d'énergie thermique (δE_{E}) entre les éléments de chauffage et le contenu du réservoir.
R3 Troisième relation préétablie faisant correspondre, le bilan énergétique (ΔE) et la quantité (δVᵢ) de liquide décongelé ou recongelé.
Si Vitesse du véhicule pendant l'intervalle de temps ΔTᵢ considéré.
T_{DT} Temps mort.
T₁ Durée non nulles préétablies.
ΔTᵢ Intervalles de temps.
ΔT₁ Premier intervalle de temps au cours duquel on exécute l'étape A.
T_{P} Temps de stationnement.
T_{Pmax} Seuil de temps de stationnement préétabli.
θᵢₙₜ₀ Température initiale à l'intérieur du réservoir.
θ_{S1} Premier seuil de température préétabli.
θ_{S2} Second seuil de température préétabli.
θ_{S3} Troisième seuil de température préétabli.
Gₑₓₜᵢ Température de l'air ambiant à l'extérieur du réservoir pour un intervalle de temps ΔTᵢ considéré.
V₀ Volume initial sous forme liquide.
V_{R} Valeur de liquide recongelé pendant la durée de stationnement.
δVᵢ Quantité de liquide congelé ou décongelé pendant l'intervalle de temps ΔTᵢ considéré.
Vwc Volume estimé de liquide décongelé présent dans le réservoir.
V_{WCP} Volume estimé de liquide présent dans le réservoir au moment du précédent arrêt du véhicule.
V_{inf} Seuil de volume préétabli.
V_{act} Volume actualisé de liquide présent dans le réservoir estimé à l'aide d'un capteur immergé.
V_{Inj} Volume de liquide injecté par la pompe d'injection pendant l'intervalle de temps ΔTᵢ considéré.
ζ Signal d'un capteur immergé.

## Revendications

1. Méthode d'estimation d'un volume de liquide décongelé contenu dans un réservoir (1) de véhicule automobile, ledit réservoir comprenant au moins un élément de chauffage (2) disposé à l'intérieur du réservoir, dans laquelle, après avoir démarré le véhicule et lorsque le au moins un moyen de chauffage est activé, on exécute à intervalles de temps (ΔTᵢ) réguliers les opérations suivantes :
- Étape A (201): à l'aide d'un thermomètre (7) disposé à l'extérieur du réservoir, on obtient une température de l'air ambiant à l'extérieur (θₑₓₜᵢ) du réservoir,
- Étape B (202) : en fonction de ladite température à l'extérieur du réservoir (θₑₓₜᵢ) et, à l'aide d'une première relation préétablie (R₁(θₑₓₜᵢ)), on détermine un transfert d'énergie thermique (δE_{S}) entre le contenu du réservoir et le milieu extérieur,
- Étape C (203) : en fonction de la puissance (W) produite par le au moins un élément de chauffage (2), et à l'aide d'une seconde relation préétablie (R₂(W)), on détermine un transfert d'énergie thermique (δE_{E}) entre le au moins élément de chauffage (2) et le contenu du réservoir,
- Étape D (204, 205) : en fonction des transferts d'énergie (δEᵢ=δE_{S}+δE_{E}) déterminés aux étapes B et C, et à l'aide d'une troisième relation préétablie (R₃(δEᵢ)), on détermine une quantité (δVᵢ) de liquide décongelé ou recongelé, pendant cet intervalle de temps (ΔTᵢ),
- Étape E (206) : on additionne les quantités de liquide décongelés et recongelés (δVi) pendant les intervalles de temps successifs précédents pour déterminer un volume estimé de liquide décongelé présent dans le réservoir (Vwc= ΣδVᵢ).

2. Méthode selon la revendication 1, dans laquelle, après avoir démarré le véhicule et avant la première exécution de l'étape A, on obtient une température à l'intérieur du réservoir (θᵢₙₜ₀) à l'aide d'un thermomètre (6) placé à l'intérieur dudit réservoir et, en comparant cette température initiale (θᵢₙₜ₀) à l'intérieur du réservoir à des seuils de température (θ_{S1}, θ_{S2}, θ_{S3}) préétablis, on détermine, en fonction d'un temps d'arrêt (T_{P}) du véhicule et d'un volume (V_{wcp}) présent dans le réservoir au début dudit temps d'arrêt du véhicule, un volume initial (V₀) sous forme liquide présent dans le réservoir, et un temps mort (T_{DT}) à l'issue duquel on exécute ladite étape A pour un premier intervalle de temps (ΔT₁)

3. Méthode selon la revendication 2, dans laquelle on détermine la valeur du volume initial (V₀) sous forme liquide présent dans le réservoir, et du temps mort (T_{DT}) de sorte que :
- lorsque (101) la température (θᵢₙₜ₀) initiale à l'intérieur du réservoir est supérieure à un premier seuil donné (θ_{S1}) supérieur ou égal à un second seuil donné (θ_{S2}), le volume initial (V₀) est égal à un volume (V_{act}) actualisé (V₀=V_{act}) et le temps mort (T_{DT}) est égal à zéro (T_{DT}=0), ou
- lorsque (102) la température (θᵢₙₜ₀) initiale à l'intérieur du réservoir est inférieure audit premier seuil donné (θ_{S1}) on active ledit moyen de chauffage et
∘ lorsque (103) la température initiale à l'intérieur du réservoir (θᵢₙₜ₀) est inférieure à un troisième seuil de température (θ_{S3}) donné (θ_{Int0}<θ_{S3}), le volume initial (V₀) est égal à zéro (V₀= 0) et le temps mort (T_{DT}) est égal à une valeur prédéterminée (T_{DT}=T₀), ou
∘ lorsque (104) la température initiale à l'intérieur du réservoir (θᵢₙₜ₀) est comprise (θ_{S3}<θ_{Int0}<θ_{S2}) entre le troisième seuil de température (θ_{S3}) et un deuxième seuil de température donné (θ_{S2}) supérieur au troisième seuil (θ_{S3}) et,
▪ lorsqu'un (105) volume estimé de liquide présent dans le réservoir au moment du précédent arrêt du véhicule (V_{WCP}) est inférieur à un seuil (V_{inf}) donné (V_{WCP}< V_{inf}), le volume initial (V₀) est égal à zéro (V₀= 0) et le temps mort (T_{DT}) est égal à ladite valeur prédéterminée (T_{DT}=T₀), ou
▪ lorsque ledit volume estimé de liquide présent dans le réservoir au moment du précédent arrêt du véhicule (V_{WCP}) est supérieur audit seuil (V_{inf}) donné (V_{WCP}> V_{inf}) et,
• lorsqu'un (106) temps de stationnement du véhicule (Tₚ) est supérieur à un seuil donné (T_{Pmax}) la valeur du volume initial (V₀) est égale à zéro (V₀= 0), et le temps mort (T_{DT}) est égal à zéro ou,
• lorsque (107) ledit temps de stationnement du véhicule (Tₚ) est inférieur audit seuil donné (T_{Pmax}), le volume initial (V₀) est égal au volume (V_{WCP}) estimé de liquide présent dans le réservoir au moment du précédent arrêt du véhicule diminué d'un volume (V_{R}) de liquide recongelé pendant la durée de stationnement du volume (V₀= V_{WCP}-V_{R}), et le temps mort (T_{DT}) est égal à zéro (T_{DT}=0),

4. Méthode selon la revendication 2, dans laquelle, à l'étape E, le volume estimé de liquide décongelé présent dans le réservoir est augmenté de la valeur du volume initial (Vwc = V_{0 +} ΣδVᵢ).

5. Méthode selon la revendication 1 dans laquelle, à l'issue de l'étape E, et au cours d'une étape F on obtient un signal (ζ) d'au moins un capteur de niveau (4), et on évalue la validité de ce signal et,
o lorsque ce signal est considéré comme valable, on évalue à l'aide dudit capteur de niveau (4) une valeur de volume actualisée (V_{act}) de liquide présent dans le réservoir, et on remplace la valeur du volume estimé de liquide décongelé (Vwc) obtenue à l'issue de cet intervalle de temps par ladite valeur de volume actualisée (V_{act}) ou,
o lorsque ce signal n'est pas considéré comme valable, on conserve la valeur du volume estimé de liquide décongelé obtenue à l'issue de cet intervalle de temps (Vwc),
et on recommence l'exécution de l'étape A pour un intervalle (ΔTᵢ) de temps suivant.

6. Méthode selon l'une quelconque des revendications précédentes dans laquelle au cours de l'étape B, on obtient une valeur de la vitesse du véhicule (Sᵢ), et dans laquelle ladite première relation (R₁(θₑₓₜᵢ, Si)) dépend de la température extérieure (θₑₓₜᵢ) et de ladite vitesse du véhicule (Sᵢ).

7. Méthode selon l'une quelconque des revendications précédentes dans laquelle la première relation (R₁) permettant de déterminer un transfert d'énergie thermique (δE_{S}) entre le contenu du réservoir et le milieu extérieur, la seconde relation (R2) permettant de déterminer un transfert d'énergie thermique (δE_{E}) entre le au moins un élément de chauffage et le contenu du réservoir, et la troisième relation (R3) permettant de déterminer la quantité (δVᵢ) de liquide décongelé ou recongelé, sont établies de façon expérimentale.

8. Méthode selon l'une quelconque des revendications précédentes appliquée à un réservoir contenant de l'eau ou de l'urée dissout dans de l'eau, ou un mélange ternaire composé d'eau, d'urée, et d'un alcool.

9. Méthode selon la revendication 8 dans laquelle l'alcool formant le mélange ternaire est choisi parmi les alcools tel que le méthanol, l'éthanol, l'éthylène-glycol ou l'isopropanol.

10. Dispositif de stockage d'un liquide disposé dans un véhicule comprenant :
- un réservoir de stockage (1) comprenant au moins un élément de chauffage (2),
- un thermomètre disposé à l'intérieur (6) du réservoir pour mesurer la température (θᵢₙₜ₀) du liquide à l'intérieur du réservoir,
- un thermomètre disposé à l'extérieur (7) du réservoir pour mesurer la température (θₑₓₜᵢ) de l'air ambiant à l'extérieur du véhicule.,
- un ou plusieurs capteurs immergés (4, 5);
- un moyen de mesure de la vitesse du véhicule (8),
- une pompe d'injection (3) associée à un moyen de mesure d'un volume injecté,
- une unité de traitement informatique (9) reliée par des moyens d'échange de données avec les moyens de mesure de la température (6, 7), le ou les capteurs immergés (4, 5), le moyen de mesure de la vitesse (8) du véhicule, le moyen de mesure d'un volume injecté, et comprenant un moyen de stockage des valeurs préétablies et des valeurs variables,
- des instructions codées chargées dans l'unité de traitement informatique (9) permettant d'exécuter les étapes de la méthode selon l'une des revendications 1 à 9.

## Patentansprüche

1. Verfahren zur Schätzung eines in einem Tank (1) eines Kraftfahrzeugs enthaltenen aufgetauten Flüssigkeitsvolumens, wobei der Tank wenigstens ein Heizelement (2) umfasst, das im Inneren des Tanks angeordnet ist, bei dem, nach dem Anlassen des Fahrzeugs und wenn das wenigstens eine Heizelement aktiviert ist, in regelmäßigen Zeitintervallen (ΔTᵢ) die folgenden Arbeitsgänge ausgeführt werden:
- Schritt A (201): mit Hilfe eines Thermometers (7), das außerhalb des Tanks angeordnet ist, Erhalten einer Temperatur der Umgebungsluft außerhalb (θₑₓₜᵢ) des Tanks,
- Schritt B (202): in Abhängigkeit von der Temperatur außerhalb des Tanks (θₑₓₜᵢ) und, mit Hilfe einer vorab festgelegten ersten Beziehung (R₁(θₑₓₜᵢ)), Ermitteln eines Transfers thermischer Energie (δE_{S}) zwischen dem Inhalt des Tanks und der äußeren Umgebung,
- Schritt C (203): in Abhängigkeit von der Leistung (W), die von dem wenigstens einen Heizelement (2) erzeugt wird, und mit Hilfe einer vorab festgelegten zweiten Beziehung (R₂(W)), Ermitteln eines Transfers thermischer Energie (δE_{E}) zwischen dem wenigstens einen Heizelement (2) und dem Inhalt des Tanks,
- Schritt D (204, 205): in Abhängigkeit von den Energietransfers (δEᵢ=δE_{S}+δE_{E}), die in den Schritten B und C ermittelt wurden, und mit Hilfe einer vorab festgelegten dritten Beziehung (R₃(δEᵢ)), Ermitteln einer Menge (δVᵢ) aufgetauter oder wieder gefrorener Flüssigkeit, während dieses Zeitintervalls (ΔTᵢ),
- Schritt E (206): Addieren der Mengen aufgetauter und wieder gefrorener Flüssigkeit (δVᵢ) während der vorangegangenen aufeinanderfolgenden Zeitintervalle, um ein geschätztes Volumen der aufgetauten Flüssigkeit in dem Tank zu ermitteln (V_{WC}=ΣδVᵢ).

2. Verfahren nach Anspruch 1, bei dem, nach dem Anlassen des Fahrzeugs und vor dem ersten Ausführen von Schritt A, eine Temperatur im Inneren des Tanks (θᵢₙₜ₀) mit Hilfe eines Thermometers (6), das im Inneren des Tanks angeordnet ist, ermittelt wird und, durch Vergleichen dieser anfänglichen Temperatur (θᵢₙₜ₀) im Inneren des Tanks mit vorab festgelegten Temperaturschwellwerten (θ_{S1}, θ_{S2}, θ_{S3}), in Abhängigkeit von einer Anhaltezeit (T_{P}) des Fahrzeugs und von einem Volumen (V_{WCP}), das in dem Tank zu Beginn der Anhaltezeit des Fahrzeugs vorhanden ist, ein in dem Tank in flüssiger Form vorhandenes anfängliches Volumen (V₀) und eine Totzeit (T_{DT}), an deren Ende Schritt A für ein erstes Zeitintervall (ΔT₁) ausgeführt wird, bestimmt werden.

3. Verfahren nach Anspruch 2, bei dem der Wert des in dem Tank in flüssiger Form vorhandenen anfänglichen Volumens (V₀) und der Totzeit (T_{DT}) ermittelt wird, so dass:
- wenn (101) die anfängliche Temperatur (θᵢₙₜ₀) im Inneren des Tanks größer ist als ein bestimmter erster Schwellwert (θ_{S1}), der größer als oder gleich einem bestimmten zweiten Schwellwert (θ_{S2}) ist, das anfängliche Volumen (V₀) gleich einem Volumen (V_{act}) ist, das aktualisiert ist, (V₀=V_{act}) und die Totzeit (T_{DT}) gleich Null ist (T_{DT}=0) oder,
- wenn (102) die anfängliche Temperatur (θᵢₙₜ₀) im Inneren des Tanks kleiner ist als der bestimmte erste Schwellwert (θ_{S1}), das Heizmittel aktiviert wird und,
o wenn (103) die anfängliche Temperatur im Inneren des Tanks (θᵢₙₜ₀) kleiner ist als ein bestimmter dritter Schwellwert (θ_{S3}) (θᵢₙₜ₀<θ_{S3}), das anfängliche Volumen (V₀) gleich Null ist (V₀=0) und die Totzeit (T_{DT}) gleich einem vorab bestimmten Wert ist (T_{DT}=T₀) oder,
o wenn (104) die anfängliche Temperatur im Inneren des Tanks (θᵢₙₜ₀) zwischen dem dritten Temperaturschwellwert (θ_{S3}) und einem bestimmten zweiten Temperaturschwellwert (θ_{S2}), der größer ist als der dritte Schwellwert (θ_{S3}), liegt (θ_{S3}<θᵢₙₜ₀<θ_{S2}) und,
wenn (105) ein geschätztes Flüssigkeitsvolumen (V_{WCP}), das in dem Tank zum Zeitpunkt des vorangegangenen Anhaltens des Fahrzeugs vorhanden ist, kleiner ist als ein bestimmter Schwellwert (V_{inf}) (V_{WCP}<V_{inf}), das anfängliche Volumen (V₀) gleich Null ist (V₀=0) und die Totzeit (T_{DT}) gleich dem vorab bestimmten Wert ist (T_{DT}=T₀) oder,
wenn das geschätzte Flüssigkeitsvolumen (V_{WCP}), das in dem Tank zum Zeitpunkt des vorangegangenen Anhaltens des Fahrzeugs vorhanden ist, größer ist als der bestimmte Schwellwert (V_{inf}) (V_{WCP}> V_{inf}) und,
wenn (106) eine Abstellzeit (T_{P}) des Fahrzeugs größer ist als ein bestimmter Schwellwert (T_{Pmax}), der Wert des anfänglichen Volumens (V₀) gleich Null ist (V₀=0) und die Totzeit (T_{DT}) gleich Null ist oder,
wenn (107) die Abstellzeit (T_{P}) des Fahrzeugs kleiner ist als ein bestimmter Schwellwert (T_{Pmax}), das anfängliche Volumen (V₀) gleich dem geschätzten Flüssigkeitsvolumen (V_{WCP}), das in dem Tank zum Zeitpunkt des vorangegangenen Anhaltens des Fahrzeugs vorhanden ist, ist, verringert um ein Flüssigkeitsvolumen (V_{R}), das während der Dauer des Abstellens des Volumens [sic] wieder gefroren ist, (V₀=V_{WCP}-V_{R}) , und die Totzeit (T_{DT}) gleich Null ist (T_{DT}=0) ,

4. Verfahren nach Anspruch 2, bei dem, in Schritt E, das geschätzte in dem Tank vorhandene aufgetaute Flüssigkeitsvolumens um den Wert des anfänglichen Volumens erhöht wird (V_{WC}=V₀+ΣΔV_{I}).

5. Verfahren nach Anspruch 1, bei dem, am Ende von Schritt E und im Laufe eines Schrittes F, ein Signal (ζ) wenigstens eines Pegelsensors (4) erhalten wird und die Gültigkeit dieses Signals ausgewertet wird und,
o wenn dieses Signal als gültig erachtet wird, mit Hilfe des Pegelsensors (4) ein aktualisierter Wert für das in dem Tank vorhandene Flüssigkeitsvolumen (V_{act}) bestimmt wird und der Wert des geschätzten aufgetauten Flüssigkeitsvolumens (V_{WC}), der am Ende dieses Zeitintervalls erhalten wurde, durch den aktualisierten Wert für das Volumen (V_{act}) ersetzt wird oder,
o wenn dieses Signal nicht als gültig erachtet wird, der Wert des geschätzten aufgetauten Flüssigkeitsvolumens (V_{WC}), der am Ende dieses Zeitintervalls erhalten wurde, beibehalten wird
und das Ausführen von Schritt A für ein folgendes Zeitintervall (ΔTᵢ) wiederaufgenommen wird.

6. Verfahren nach einem der vorhergehenden Ansprüche, bei dem im Laufe von Schritt B ein Wert für die Geschwindigkeit des Fahrzeugs (Si) erhalten wird und bei dem die erste Beziehung (R₁ (θₑₓₜᵢ) , Si) von der Außentemperatur (θₑₓₜᵢ) und von der Geschwindigkeit des Fahrzeugs (Si) abhängt.

7. Verfahren nach einem der vorhergehenden Ansprüche, bei dem die erste Beziehung (R₁), die das Ermitteln eines Transfers thermischer Energie (δE_{S}) zwischen dem Inhalt des Tanks und der äußeren Umgebung gestattet, die zweite Beziehung (R₂), die das Ermitteln eines Transfers thermischer Energie (δE_{E}) zwischen dem wenigstens einen Heizelement und dem Inhalt des Tanks gestattet, und die dritte Beziehung (R₃), die das Ermitteln der Menge (δVᵢ) aufgetauter oder wieder gefrorener Flüssigkeit gestattet, auf experimentelle Weise aufgestellt werden.

8. Verfahren nach einem der vorhergehenden Ansprüche, angewendet auf einen Tank, der Wasser oder in Wasser gelösten Harnstoff, oder ein ternäres Gemisch, bestehend aus Wasser, Harnstoff und einem Alkohol, enthält.

9. Verfahren nach Anspruch 8, bei dem der Alkohol, der das ternäre Gemisch bildet, ausgewählt wird aus den Alkoholen wie Methanol, Ethanol, Ethylen-Glykol oder Isopropanol.

10. In einem Fahrzeug angeordnete Vorrichtung zum Speichern einer Flüssigkeit, umfassend:
- einen Speichertank (1), umfassend wenigstens ein Heizelement (2),
- ein Thermometer, das im Inneren (6) des Tanks zum Messen der Temperatur (θᵢₙₜ₀) der Flüssigkeit im Inneren des Tanks angeordnet ist,
- ein Thermometer, das außerhalb (7) des Tanks zum Messen der Temperatur (θₑₓₜᵢ) der Umgebungsluft außerhalb des Fahrzeugs angeordnet ist.,
- einen oder mehrere Tauchsensoren (4, 5);
- ein Mittel (8) zum Messen der Geschwindigkeit des Fahrzeugs,
- eine Einspritzpumpe (3), die einem Mittel zum Messen eines eingespritzten Volumens zugeordnet ist,
eine Datenverarbeitungseinheit (9), die durch Datenaustauschmittel mit den Mitteln (6, 7) zum Messen der Temperatur, dem oder den Tauchsensoren (4, 5), dem Mittel (8) zum Messen der Geschwindigkeit des Fahrzeugs, dem Mittel zum Messen eines eingespritzten Volumens verbunden ist und ein Mittel zum Speichern der vorab festgelegten Werte und der variablen Werte umfasst,
- codierte Anweisungen, die in der Datenverarbeitungseinheit (9) geladen sind und das Ausführen der Schritte des Verfahrens nach einem der Ansprüche 1 bis 9 gestatten.

## Claims

1. A method for estimating a volume of thawed liquid contained in a motor vehicle tank (1), said tank comprising at least one heating element (2) arranged inside the tank, wherein, after having started the vehicle and when the at least one heating means is activated, the following operations are executed at regular time intervals (ΔTᵢ):
- Step A (201): using a thermometer (7) arranged outside the tank, a temperature (θₑₓₜᵢ) of the ambient air outside the tank is obtained,
- Step B (202): as a function of said temperature (θₑₓₜᵢ) outside the tank and, using a first preestablished relationship (R₁(θₑₓₜᵢ)), a heat-energy transfer (δE_{S}) between the contents of the tank and the external surroundings is determined,
- Step C (203): as a function of the power (W) produced by the at least one heating element (2), and using a second preestablished relationship (R₂(W)), a heat-energy transfer (δE_{E}) between the at least one heating element (2) and the contents of the tank is determined,
- Step D (204, 205): as a function of the energy transfers (δEᵢ=δE_{S}+δE_{E}) determined in steps B and C, and using a third preestablished relationship (R₃(δEᵢ)), a quantity (δVᵢ) of liquid thawed or refrozen during this time interval (ΔTᵢ) is determined,
- Step E (206): the quantities of liquid (δVi) thawed and refrozen during the preceding successive time intervals are summed in order to determine an estimated volume of thawed liquid present in the tank (Vwc= ΣδVᵢ).

2. The method according to claim 1, wherein, after having started the vehicle and prior to executing step A for the first time, a temperature inside the tank (θᵢₙₜ₀) is obtained using a thermometer (6) placed inside said tank and, by comparing this initial temperature (θᵢₙₜ₀) inside the tank against pre-established temperature thresholds (θ_{S1}, θ_{S2}, θ_{S3}), an initial volume (V₀) in liquid form present in the tank, and a dead time (T_{DT}) at the end of which said step A is executed for a first time interval (ΔT₁) are determined, as a function of a time (T_{P}) for which the vehicle is stopped and of a volume (V_{wcp}) present in the tank at the start of said time for which the vehicle is stopped.

3. The method according to claim 2, wherein the value of the initial volume (V₀) in liquid form present in the tank and of the dead time (T_{DT}) are determined in such a way that:
when (101) the initial temperature (θᵢₙₜ₀) inside the tank is above a first given threshold (θ_{S1}) greater than or equal to a second given threshold (θ_{S2}), the initial volume (V₀) is equal to an updated volume (V_{act}) (V₀=V_{act}) and the dead time (T_{DT}) is equal to zero (T_{DT}=0), or
when (102) the initial temperature (θᵢₙₜ₀) inside the tank is below said first given threshold (θ_{S1}), said heating means is activated, and
∘ when (103) the initial temperature inside the tank (θᵢₙₜ₀) is below a third given temperature threshold (θ_{S3}) (θᵢₙₜ₀<θ_{S3}), the initial volume (V₀) is equal to zero (V₀= 0) and the dead time (T_{DT}) is equal to a predetermined value (T_{DT}=T₀), or
∘ when (104) the initial temperature inside the tank (θᵢₙₜ₀) is comprised (θ_{S3}<θᵢₙₜ₀<θ_{S2}) between the third temperature threshold (θ_{S3}) and a second given temperature threshold (θ_{S2}) higher than the third threshold (θ_{S3}), and
▪ when (105) an estimated volume of liquid present in the tank at the moment of the previous stopping of the vehicle (V_{WCP}) is below a given threshold (Vinf) (V_{WCP}< V_{inf}), the initial volume (V₀) is equal to zero (V₀= 0) and the dead time (T_{DT}) is equal to said predetermined value (T_{DT}=T₀), or
▪ when said estimated volume of liquid present in the tank at the moment of the previous stopping of the vehicle (V_{WCP}) is above said given threshold (V_{inf}) (V_{WCP}> V_{inf}), and
• when (106) a time for which the vehicle has been parked (Tₚ) is above a given threshold (T_{Pmax}), the value of the initial volume (V₀) is equal to zero (V₀= 0), and the dead time (T_{DT}) is equal to zero, or
• when (107) said time for which the vehicle has been parked (Tₚ) is below said given threshold (T_{Pmax}), the initial volume (V₀) is equal to the estimated volume (V_{WCP}) of liquid present in the tank at the moment of the previous stopping of the vehicle decreased by a volume (V_{R}) of liquid that has refrozen during the time for which the volume has been parked (V₀= V_{WCP}-V_{R}), and the dead time (T_{DT}) is equal to zero (T_{DT}=0).

4. The method according to claim 2, wherein, in step E, the estimated volume of thawed liquid present in the tank is increased by the value of the initial volume (Vwc = V_{0 +} ΣδVᵢ).

5. The method according to claim 1, wherein, at the end of step E, and during a step F, a signal (ζ) is obtained from at least one level sensor (4), and the validity of this signal is assessed, and
o when this signal is considered to be valid, an updated value (V_{act}) for the volume of liquid present in the tank is evaluated using said level sensor (4), and the value of the estimated volume of thawed liquid (Vwc) obtained at the end of this time interval is replaced with said updated volume value (V_{act}), or
o when this signal is considered to be invalid, the value for the estimated volume of thawed liquid that was obtained at the end of this time interval (Vwc) is retained,
and step A is executed again for a subsequent time interval (ΔTᵢ).

6. The method according to any one of the preceding claims, wherein, during step B, a vehicle speed value (Sᵢ) is obtained, and wherein said first relationship (R₁(θₑₓₜᵢ, Sᵢ)) is dependent on the external temperature (θₑₓₜᵢ) and on said vehicle speed (Sᵢ).

7. The method according to any one of the preceding claims, wherein the first relationship (R₁) making it possible to determine a heat-energy transfer (δE_{S}) between the contents of the tank and the external surroundings, the second relationship (R₂) making it possible to determine a heat-energy transfer (δE_{E}) between the at least one heating element and the contents of the tank, and the third relationship (R3) making it possible to determine the quantity (δVᵢ)of liquid thawed or refrozen, are established experimentally.

8. The method according to any one of the preceding claims applied to a tank containing water or urea dissolved in water, or a ternary mixture made up of water, urea, and an alcohol.

9. The method according to claim 8, wherein the alcohol forming the ternary mixture is selected from alcohols such as methanol, ethanol, ethylene glycol or isopropanol.

10. A device for storing a liquid arranged in a vehicle comprising:
- a storage tank (1) comprising at least one heating element (2),
- a thermometer (6) positioned inside the tank to measure the temperature (θᵢₙₜ₀) of the liquid inside the tank,
- a thermometer (7) positioned outside the tank to measure the temperature (θₑₓₜᵢ) of the ambient air outside the vehicle,
- one or more submerged sensors (4, 5);
- a means (8) for measuring the speed of the vehicle,
- an injection pump (3) associated with a means for measuring an injected volume,
- a computer processing unit (9) connected by data interchange means to the temperature measurement means (6, 7), the submerged sensor or sensors (4, 5), the vehicle speed measuring means (8), the injected-volume measuring means, and comprising a means for storing preestablished values and variable values,
- coded instructions loaded into the computer processing unit (9) to enable the execution of the steps of the method according to one of claims 1 to 9.
